Europäisches Patentamt

European Patent Office

Office européen des brevets

(19)

(11) **EP 0 872 278 A1**

(12) **EUROPEAN PATENT APPLICATION**

(43) Date of publication:
**21.10.1998 Bulletin 1998/43**

(51) Int Cl.⁶: **B01J 47/08**, B01D 71/02,
C02F 1/469

(21) Application number: **98870082.9**

(22) Date of filing: **15.04.1998**

(84) Designated Contracting States:
**AT BE CH CY DE DK ES FI FR GB GR IE IT LI LU
MC NL PT SE**
Designated Extension States:
**AL LT LV MK RO SI**

(30) Priority: **16.04.1997 ZA 9703220**

(71) Applicant: **"VLAAMSE INSTELLING VOOR
TECHNOLOGISCH ONDERZOEK",
afgekort "V.I.T.O."
2400 Mol (BE)**

(72) Inventors:
• **Belyakov, Vladimir Nikolaevich
Kiev 225, 253225 (UA)**
• **Linkov, Vladimir Mikhailovich
Somerset West 7130 (ZA)**

(74) Representative: **Van Malderen, Joelle et al
Office Van Malderen,
Place Reine Fabiola 6/1
1083 Bruxelles (BE)**

(54) **Electrosorption membrane**

(57)     An electrosorption membrane made of porous
material, preferably a porous ceramic material.

Fig. 4

**Description**

**Field of the invention**

The present invention relates to a ceramic based electrosorption membrane and to a water purification device comprising said membrane.

**Background of the invention**

The latest tendency in research in the field of water purification is to investigate new technologies which would simplify the complex problem of water purification by means of requiring only one purification apparatus or device, which would preferably function effectively with low energy consumption.

Usually, the elimination of anions and cations (including heavy metals and radioisotopes) from waste water streams is performed by means of Ion Exchange columns. This method in itself yields large volumes of secondary waste streams, such as used resins and regeneration solutions containing acids or bases.

At present the electrochemically-activated methods of water purification processing are being intensively researched. Investigations have shown that the use of electric fields, with intensities of $E = 200 \times 10^2$ $V.m^{-1}$ and higher, which are applied to aqueous solutions, result in significant decreases in the hardness, opacity, colour, and percentage of toxic heavy metal ions and bacterial content of unpurified water. Such methods have not been widely used in water purification processing because of their complex nature and high energy consumption requirements.

In the literature there is some information about apparatuses with polarised sorbents which are used for water processing. Generally the conductive carbon materials, such as activated carbon and powdered graphite are used (Grevillot G., *Separation processes based on electroelectrosorption phenomena /, in A.E. Rodrigues at al. (Eds) Adsorption, Science* & *Technology,* Kluwer Acad. Press Publishers, 1989) as well as inorganic gels (US *patent 3,847,788).* A study of the sorption of d-metal ions from water by polarised phosphates revealed an increase in sorption capacity of up to 200 %; this indicated a significant improvement in kinetic characteristics as a result of an increase in sorption rate. Notwithstanding the significance of these results, it is still the disperse electrode, and not the electrochemically optimised ones, which are widely used as the sorption electrodes.

A problem associated with the application of disperse sorbents is the poor electrical contact between particles. Significant inter-particle resistance restricts the value of exchange currents between the sorbent granules. This leads to a long sorption equilibrium stabilising time as a result of a rather long time required for sorbent charging and for reconstruction of its electric double layer. The second shortcoming of disperse sorbents is the inability to construct mechanically durable elements from them. In general, sorbents are used in electrochemical devices as a bulk layer. This significantly complicates the problem of current feed to the sorbent granules and produces different potential values in the sorbent layer. As a result the electrical sorption activities of particles in the sorbent layer differ significantly.

A third restriction of disperse sorbents is their porous structure. Most carbon sorbents (active carbons) are microporous, but it is known that pores with diameters of less than 200 Å can be not electrochemically active because the formation of a double electric layer in such pores is impossible. Therefore, the greater part of the carbon sorbent surface cannot be effectively used in electrochemically controlled sorption processes. Moreover, the carbon materials have extremely low sorption activities in relation to metal cations, despite the necessity of their removal from aqueous solutions.

**Aims of the invention**

The present invention aims to provide new means for the purification of water and which do not present the drawbacks of the state of the art.

A main aim of the invention is to provide a new water purification device which is more simple, more efficient and less costly in terms of energy consumption than the devices of the state of the art.

**Summary of the invention**

A first aspect of the present invention is an electrosorption membrane made of porous material, preferably porous ceramic material. The porous membrane can be impregnated with an electronic and/or mixed conducting layer, preferably selected from the group consisting of pyrolytic carbon, carbon aerogel, polyaniline, polyphosphate or a mixture thereof.

The porous ceramic material is preferably made of a multivalent metal oxide, advantageously an ampholyte, more advantageously selected from the group consisting of $Al_2O_3$, $ZrO_2$ or a mixture thereof.

In a specific embodiment of the present invention, the membrane is tubular.

A second aspect of the present invention is a water purification device comprising a membrane as above described and being adapted to act as an electrode.

Such a water purification device can comprise a first electrosorption outer tubular membrane and an inner membrane located inside the outer tubular membrane and spaced apart therefrom so that a first flow channel is defined between the outer tubular membrane and the inner membrane, both the outer tubular membrane and the inner membrane being adapted to act as electrodes. The inner membrane and/or the outer electrosorption membrane can comprise electroconductive deposits on their surface. The inner membrane is preferably tubular. In a preferred embodiment, the inner membrane is an electrosorption membrane.

A third aspect of the present invention is a water purification device that comprises an electrosorption tubular membrane and an inner electrode located inside said electrosorption tubular membrane and spaced apart therefrom so that a first flow channel is defined between said electrosorption tubular membrane and the inner electrode, and an outer tubular electrode that is located around said electrosorption tubular membrane, forming a second flow channel located between said electrosorption tubular membrane and said outer tubular electrode. The outer tubular electrode can comprise a porous ceramic membrane. The inner electrode and the outer tubular electrode preferably comprise electroconductive deposits on their surface. In a preferred embodiment, the first and the second flow channel each comprises one inlet or outlet to allow flow of water into one of the flow channels which is directed through the electrosorption tubular membrane to the other flow channel.

Another aspect of the present invention is a method for manufacturing an electrosorption membrane as described higher, characterised in that a porous ceramic membrane is impregnated with disperse carbon by precipitation of pyrolytic carbon or with polyaniline by electrochemical deposition.

A final aspect of the present invention is the use of the purification devices as described higher for the removal of contaminants in an aqueous or non-aqueous fluids

## Detailed description of the invention

The present invention is a ceramic based electrosorption membrane which is advantageously used in a process of electrochemically activated sorption (electrosorption) in water purification as this process requires a low energy consumption and has a high efficiency.

The polarisation of conductive sorbents can change the value and sign of the surface charge, and it is this which determines the sorption activity towards ions and compounds with low polarisation energy. Such an influence of an electric field on the surface charge of a sorbent enables the optimisation of the sorption process and effectively increases the sorption capacity. The non-chemical regeneration of adsorbents, by changing the value and sign of the surface charge, is also important.

Furthermore, it is significant that polarised conductive sorbents are able to function as 3D-electrodes. It means that some of the electrochemical processes, which take place on the surface of conductive sorbents, can be used to control sorption processes. For example, the use of a three-dimensional sorption electrode for water electrolysis results in a change in the environmental acidity in the sorbent phase. In other words, the application of a three-dimensional sorption electrode for water electrolysis results in the acidification of the free electrode space in the anodic polarisation process and the alkalisation of it in the cathodic polarisation process. The application of this property is of great importance in ion-exchange sorption because it allows the equilibrium of the ion-exchange reaction to be shifted and to increase or decrease the sorption of ionic components in a solution.

In terms of energy consumption, electrochemically controlled sorption has a great advantage over other types of water purification processes.

Among the vast range of new materials produced by industry, inorganic membranes of porous ceramics appear to be most appropriate as starting materials for preparation of electrosorption membranes. As indicated above, the basis of porous ceramics are the oxides of multivalent metals, such as $Al_2O_3$ and $ZrO_2$. They are ampholytes (i.e. they are able to adsorb both cations and anions) and are chemically stable over a wide pH range.

The porous structures of such materials are restricted by various factors. The macroporous structure and comparatively high specific surface value (up to 10 - 20 $m^2 \cdot g^{-1}$) allows us to consider such materials as prospective sorbents with good kinetic characteristics. Moreover, the high total porosity (up to 50 %) allows for their use as a matrix for the production of composite sorbents by modification, via the volume incorporation of other sorption active components, such as the phosphates of multivalent metals. Ceramics can likewise obtain electrically conductive properties by means of a similar modification, for example, by the precipitation of pyrolytic carbon or metals. Regulation of the porous structure has to be considered. This could possibly lead to the preparation of materials, not only as sorption electrodes but at the same time as membrane filters for the removal of water contaminants of relatively small size (more than 0.1 μm), including bacteria.

In the examples, ceramic membranes produced according to the patent ZA 977639 by V.M. Linkov and V.N. Belyakov and aerogel ceramic membranes produced according to the patent ZA 980957 by V.M. Linkov, V.N. Belyakov and L.A. Belyakova were used as supports for the preparation of electrosorption membranes.

The present invention will be further explained in several illustrative examples, without limiting the scope of the invention.

**Brief Description of the Figures:**

Figure 1 shows an apparatus that can be used to prepare a polyaniline-impregnated electrosorptive membrane.
Figure 2 describes a single membrane cell according to the present invention.
Figure 3 describes a double membrane cell according to the present invention.
Figure 4 a and b disclose a bipolar membrane cell according to the invention.

Example 1 : precipitation of pyrolytic carbon on oxide-based porous ceramic materials

To obtain electrically conductive properties, the oxide-based porous ceramic materials were treated by the incorporation of disperse carbon into the pores. One method of doing this is by the precipitation of pyrolytically obtained carbon, for example, from natural gas:

$$CH_4 \rightarrow C + 2\,H_2$$

Pyrolytic carbon precipitation on samples of ceramic material was done in a tubular flow quartz reactor. Natural gas was blown off at a predetermined temperature (800-900 °C).

Information gathered on the interaction of porous oxide ceramics with products of natural gas pyrolysis point to the following ways of producing electrically conductive carbon-ceramic materials with the necessary porous structure:

- control pore closing by deposited pyrolytic carbon (at process temperatures of up to 800 °C);
- control transformation of the ceramic surface into carbide particles of required size (at process temperatures of up to 900 °C).

Pyrolysis temperatures higher than 900 °C leads to the formation of carbides possessing electroconductivity on the ceramic surface.

Example 2 : preparation of a polyaniline membrane

Polyaniline (PANI) electrosorption membranes were prepared by electrochemical deposition of polyaniline layer onto electroconductive ceramic based membranes. Ceramic membranes which contain a layer of pyrolytically precipitated carbon, were used for this purpose. The method of carbon precipitation by the pyrolysis of natural gas has been described above. The precipitation took place under the following conditions:

- pyrolysis temperature 800 °C;
- pyrolysis time 4h.

The precipitation on the surface of the ceramic material was carried out from an aqueous solution of electrolyte with the following content:

$$1M\,H_2SO_4 + 0.1M\,C_6H_5NH_2$$

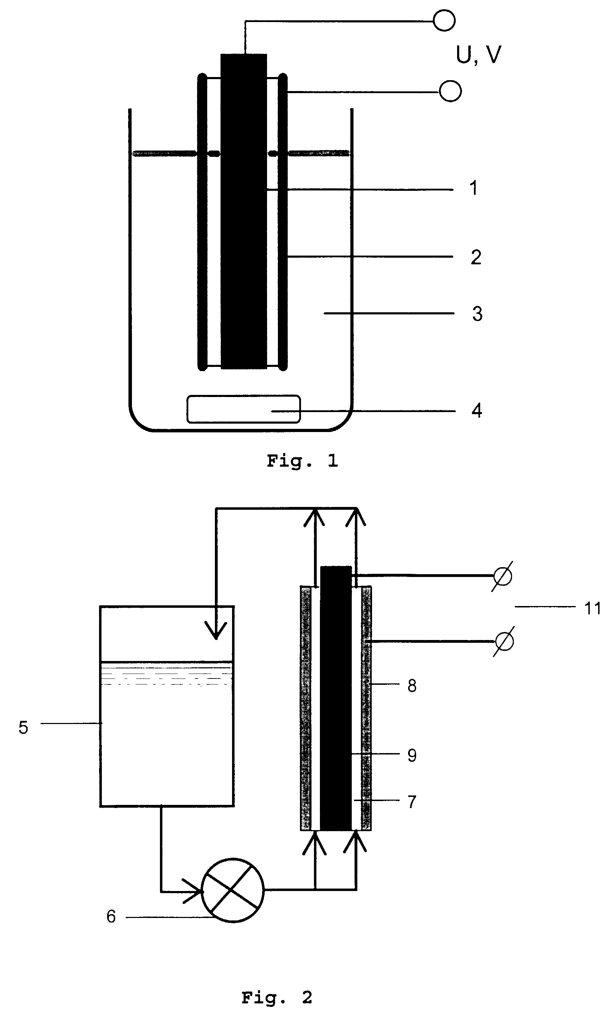

The precipitation took place in the apparatus shown in Figure 1. The graphite counter-electrode (1) was placed inside the tubular ceramic membrane (2), which contained the layer of pyrolytically precipitated carbon. The ceramic material (anode) and graphite electrode (cathode) were connected to the power supply, which was used to maintain the potential difference required for synthesis. The electrodes were then placed in the vessel with the solution of electrolyte (3), whilst stirring (4).

The synthesis took place under the following conditions:

Anode

- tubular ceramic membrane:
- length 50 mm

- diameter 11 mm
- wall thickness 1 mm

Cathode

- a graphite stem:
- length 50 mm
- diameter 6 mm

Volume of electrolyte = 90 ml.

Precipitation was carried out under conditions of current stabilisation, at a current density of 1 $A \cdot cm^{-2}$.

After electrolysis the samples were washed in distilled water until there were no traces of electrolyte, and then used in the adsorption experiments. It should be noted that the colour of the ceramic membrane depends on the PANI precipitation time. A green colour was observed while the electrolysis times were short (1-3 h), while an increase in electrolysis resulted in a dark blue colour.

The most suitable conditions for electrosorption membrane preparation are the following:

- pyrolysis temperature 900 °C, and
- pyrolysis time 4-5 h.

**Use of Electrosorption Membranes**

Example 3 : use of a single membrane cell for desalination :

In this example, the apparatus presented schematically in Figure 2 is used. The electrosorption membranes were produced by the precipitation of pyrolytic carbon on standard oxide ceramics at 900 °C.

A 0.1 N solution of sodium sulphate (volume 200 ml) from the buffer vessel (5) was passed, with the aid of a pump (6), through the intermembrane space (7) which was formed by the tubular electrosorption membrane (8) (outer diameter 11.8 mm, wall thickness 1 mm, length 52 mm) and the cylindrical graphite electrode (9). The solution was then returned to the buffer vessel. Both the membrane and the electrode were connected to a power supply (11) which provided the required potential difference between the electrodes. According to the results of early experiments it was sufficient to pass the solution through for 30 min at a rate of 2.5 $l \cdot h^{-1}$ to reach electrosorption equilibrium under the applied polarisation conditions. A 1 ml sample was then taken for further analysis and evaluated for its electrosorption capacity.

Table 1 illustrates the dependence of the electrosorption of sodium and sulphate ions, from a 0.1 N solution of sodium sulphate, by the electrosorption membrane on the electric potential drop in the system.

Table 1.

| Influence of polarisation on the adsorption ability of an electrosorption membrane for $Na^+$ and $SO_4^{2-}$ from a 0.1 N solution of $Na_2SO_4$. | | | | | |
|---|---|---|---|---|---|
| $Na^+$ | | | $SO_4^{2-}$ | | |
| Current mA | Voltage V | Adsorption capacity, meq $g^{-1}$ x $10^4$ | Current mA | Voltage V | Adsorption capacity, meq $g^{-1}$ x $10^4$ |
| 6 | -0.75 | 73 | 2 | 0.62 | 14.5 |
| 7 | -0.8 | 75 | 2.5 | 0.65 | 15 |
| 7.5 | -0.85 | 77 | 3 | 0.70 | 15.5 |
| 8 | -0.9 | 78 | 4 | 0.75 | 16 |
| 9 | -0.95 | 79 | 4.5 | 0.80 | 17 |
| 10 | -1.0 | 81 | 5 | 0.85 | 18 |
| 12 | -1.05 | 82 | 7 | 0.90 | 20 |
| 15 | -1.1 | 84 | 10 | 0.95 | 23 |
| 18 | -1.15 | 86 | 16.5 | 1.00 | 23 |
| 22 | -1.2 | 87.5 | 19 | 1.02 | 32 |
| 26 | -1.25 | 88 | - | - | - |
| 30 | -1.3 | 91 | - | - | - |

Table 1. (continued)

| Influence of polarisation on the adsorption ability of an electrosorption membrane for $Na^+$ and $SO_4^{2-}$ from a 0.1 N solution of $Na_2SO_4$. | | | | | |
|---|---|---|---|---|---|
| $Na^+$ | | | $SO_4^{2-}$ | | |
| Current mA | Voltage V | Adsorption capacity, meq $g^{-1}$ x $10^4$ | Current mA | Voltage V | Adsorption capacity, meq $g^{-1}$ x $10^4$ |
| 33 | -1.35 | 92 | - | - | - |

The adsorption of sodium ions by the electrosorption membrane was studied for cathodic polarisation (minus), while the adsorption of sulphate ions was carried out under conditions of anodic polarisation (plus). It is clearly seen from the table that an increase in the polarisation potential leads to an increase in the electrosorption ability for both cations and anions.

The $H^+$ or $OH^-$ ions generated within the membrane electrodes (depending on the polarisation sign) neutralise counter-ions, as a result of an ion exchange reaction. The equilibrium is shifted to the right, to an increased electrosorption value:

$$I \equiv Me - O^- H^+ + Na^+ \rightarrow I \equiv Me - O^- Na^+ + H^+, \text{ or}$$

$$2I \equiv Me^+ OH^- + SO_4^{2-} \rightarrow 2(I \equiv Me^+) SO_4^{2-} + 2 OH^-$$

$$H^+ + OH^- \rightarrow H_2O$$

The removal of cations and anions proceeds according to the rule of electrical neutrality and is accompanied by their substitution in the solution by $H^+$ or $OH^-$ ions generated within the membrane electrodes. The acidification (in the case of cation adsorption) or alkalisation (in case of anion adsorption) of the solution is a result of these processes.

Removal of divalent ions of calcium and magnesium from the model solution NaCl (1 g·l$^{-1}$), $MgSO_4$ (0.3 g·l$^{-1}$) and $CaCl_2$ (0.3 g·l$^{-1}$) is presented in Table 2. Cathode polarization of the electrosorption membrane causes almost complete removal of these ions from the solution while the applied potential difference is comparatively small (less than 1.4 V).

Table 2.

| Influence of polarisation value and current, which passes through the electrosorption cell, on the degree of removal of calcium and magnesium ions from the model solution. | | | | |
|---|---|---|---|---|
| | Ca | | Mg | |
| Removal Degree | I, mA | E, V | I, mA | E, V |
| 98 | - | - | 120 | -1.4 |
| 96 | 120 | -1.4 | 60 | -1.15 |
| 90 | 111 | -1.24 | 21 | -0.89 |
| 80 | 89 | -1.1 | 17 | -0.8 |
| 70 | 68 | -0.97 | 13 | -0.76 |
| 60 | 50 | -0.88 | 10 | -0.74 |
| 50 | 33 | -0.8 | 9 | -0.71 |
| 40 | 22 | -0.76 | 8 | -0.68 |
| 30 | 13 | -0.71 | 6 | -0.65 |
| 20 | 7 | -0.64 | 3 | -0.61 |
| 10 | 3 | -0.57 | 2 | -0.57 |
| 5 | 2 | -0.5 | - | -0.53 |
| 3 | - | -0.4 | - | -0.4 |

Taking the above into consideration, it is expected that a high efficiency of electrosorption towards the ions of multivalent metals, for example: Fe (III), Al (III), Cu (II), Pb (II) and Cd (II), which have comparatively lower pH values for precipitation of their associated hydroxides, will be achieved. The observed influence of cathodic polarisation on the effectiveness of the removal of $Ca^{2+}$ and $Mg^{2+}$ ions presumes the reverse effect of anodic polarisation. The data in Table 3 show that application of an opposite potential to a electrosorption membrane, which contains adsorbed ions, leads to the reverse effect. 100 % regeneration takes place at the 1V potential difference.

Table 3.

| The influence of anodic polarisation on the desorption of calcium and magnesium ions from electrosorption membrane. | | |
|---|---|---|
| E, V | Ca desorption, % | Mg desorption, % |
| 0.5 | 0 | 3 |
| 0.55 | 1 | 4 |
| 0.6 | 2 | 5 |
| 0.65 | 3 | 7 |
| 0.7 | 7 | 10 |
| 0.75 | 20 | 23 |
| 0.8 | 35 | 37 |
| 0.85 | 52 | 52 |
| 0.9 | 68 | 67 |
| 0.95 | 84 | 81 |
| 1.0 | 96 | 92 |
| 1.05 | 99 | 98 |
| 1.10 | 100 | 99 |
| 1.15 | 100 | 99 |
| 1.20 | 100 | 100 |

Example 4 : use of a double membrane cell for desalination :

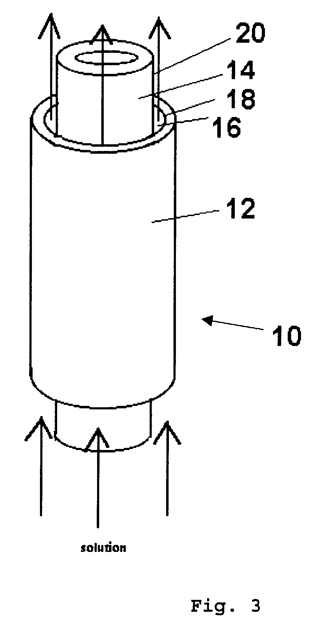

Using a double membrane cell permits the removal of ions of both cations and anions (see Figure 3). This simultaneous removal of cations and anions means that an almost constant pH is maintained in the 'purified' solution, and a high degree of purification is achieved.

The device (10) includes an outer tubular membrane (12) made of porous ceramic material and, located inside it, an inner tubular membrane (14) which is also made of porous ceramic material. A liquid flow channel (16) is defined between the inner surface (18) of the outer membrane and the outer surface (20) of the inner membrane. The membranes (12 and 14) act as electrodes, for example for desalination of aqueous solutions as described below.

The effectiveness of such an arrangement of electrosorption membranes for the removal of salts from water is demonstrated by using potassium dichromate solution with a concentration of 0.3 g.l$^{-1}$ as a model solution.

As seen from the Table 4 the sequential increase in the current which was passed through the solution led to a corresponding decrease in the concentration of chromate ions in solution. There was no change in pH value. This shows that chromate ions and potassium ions were removed from the solution simultaneously, and that the process of desalination has taken place. Electrochemical electrosorption desalination under the conditions of current stabilisation demonstrated that a decrease in salt concentration led to an increase in the potential difference between the membranes. Hence, in relation to the current which was passed between the membranes, the following changes in potential difference took place:

- 10 mA - 4.6 - 7.0 V
- 20 mA - 8.6 - 10.0 V
- 30 mA - 11.5 - 19.5 V.

The observed increases of potential difference in the process of desalination are directly related to the electrical conductivity of the solution.

Table 4.

| Desalination kinetics of a potassium dichromate solution (0.3 g.l$^{-1}$) by simultaneous application of cathodic- and anodic-polarised electrosorption membranes under conditions of current stabilisation. | | | |
|---|---|---|---|
| | $Cr_2O_7^{2-}$ concentration, g l$^{-1}$ | | |
| Desalination time, min | I = 10 mA | I = 20 mA | I = 30 mA |
| 0 | 0.20 | 0.20 | 0.20 |
| 2.5 | 0.17 | 0.15 | 0.13 |
| 5 | 0.15 | 0.12 | 0.08 |
| 7.5 | 0.15 | 0.112 | 0.05 |
| 10 | 0.15 | 0.11 | 0.04 |
| 12.5 | 0.15 | 0.108 | 0.038 |
| 15 | 0.15 | 0.107 | 0.035 |
| 17.5 | 0.15 | 0.106 | 0.033 |
| 20 | 0.15 | 0.105 | 0.03 |
| 22.5 | 0.15 | 0.105 | 0.028 |
| 25 | 0.15 | 0.105 | 0.025 |
| 27.5 | 0.15 | 0.105 | 0.023 |
| 30 | 0.15 | 0.105 | 0.02 |

Example 5 : use of a bipolar membrane cell for desalination :

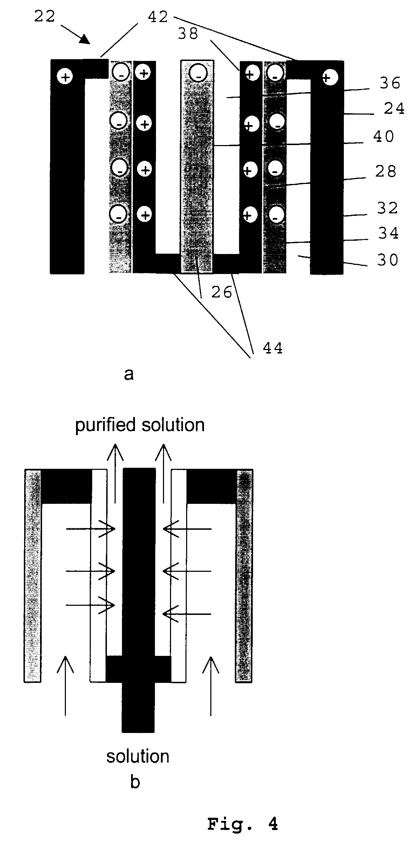

An electrosorption membrane (28) is placed between two cylindrical electrodes (24,26) with an applied potential difference (Figure 4). As a result of this, the surface of the electrosorption membrane takes on the opposite sign and the passing of a solution through such a membrane effects the simultaneous removal of both cations and anions. Moreover, such an arrangement means that the electrosorption membrane retains its membrane function for the purification of solutions containing non ionic impurities.

The device (22) as in figure 4 comprises an outer tubular electrode (24), an inner electrode rod (26) and an intermediate tubular electrosorption membrane (28). A first flow channel (30) is defined between the inner surface (32) of the outer tubular electrode (24) and the outer surface (34) of the tubular electrosorption membrane (28), and a second flow channel (36) is defined between the inner surface (38) of the tubular electrosorption membrane (28) and the outer surface (40) of the electrode rod (26). The first channel (30) is closed by a first closure (42) and the second channel (36) is closed off by a second closure (44) remote from the first closure (42).

In use, the outer tubular electrode (24) and inner electrode rod (26) will act as electrodes and will polarise the intermediate tubular electrosorption membrane (28) on its inner and outer surfaces. Flow of liquid through the membrane (28) takes place as shown in figure 4 b.

Results of testing for the removal of ionic impurities show that the membrane removes both cations and anions rather effectively (Tables 5, 6 and 7). It is important to note that the removal of ions was accompanied by almost no change of solution acidity. Moreover, the bipolar connection of the electrosorption membrane also means that it can be regenerated by changes in polarity of the surrounding electrodes.

Table 5.

| Change in the content of calcium and magnesium in the standard model solution containing NaCl (1 g · l$^{-1}$), MgSO$_4$ (0.3 g · l$^{-1}$) and CaCl$_2$ (0.3 g · l$^{-1}$) which has been pumped through a bipolar electrosorption membrane at a potential difference of 4 V, and during the regeneration of electrosorption membranes previously saturated with ions, upon repolarisation. | | | | |
|---|---|---|---|---|
| | Adsorption | | Regeneration | |
| Volume of Flown solution, 1 m$^{-2}$ | Ca conc mg l$^{-1}$ | Mg conc mg l$^{-1}$ | Ca conc mg l$^{-1}$ | Mg conc mg l$^{-1}$ |
| 0 | 120 | 40 | 0.20 | 0.10 |
| 2.5 | 80 | 37 | 1.45 | 0.50 |
| 5.0 | 13 | 30 | 1.30 | 0.45 |

Table 5.   (continued)

| Change in the content of calcium and magnesium in the standard model solution containing NaCl (1 g · l⁻¹), MgSO₄ (0.3 g · l⁻¹) and CaCl₂ (0.3 g · l⁻¹) which has been pumped through a bipolar electrosorption membrane at a potential difference of 4 V, and during the regeneration of electrosorption membranes previously saturated with ions, upon repolarisation. | | | | |
|---|---|---|---|---|
| | Adsorption | | Regeneration | |
| Volume of Flown solution, 1 m⁻² | Ca conc mg l⁻¹ | Mg conc mg l⁻¹ | Ca conc mg l⁻¹ | Mg conc mg l⁻¹ |
| 7.5 | 3 | 12 | 0.85 | 0.25 |
| 10.0 | 3 | 10 | 0.50 | 0.20 |
| 12.5 | 3 | 10 | 0.35 | 0.15 |
| 15.0 | 3 | 10 | 0.30 | 0.13 |
| 17.5 | 3 | 10 | 0.25 | 0.11 |
| 20.0 | 3 | 10 | 0.20 | 0.10 |
| 22.5 | 3 | 10 | 0.17 | 0.10 |
| 25.0 | 3 | 10 | 0.15 | 0.10 |
| 27.5 | 3 | 10 | 0.15 | 0.10 |
| 30.0 | 3 | 10 | 0.15 | 0.10 |
| 32.5 | 3 | 10 | 0.15 | 0.10 |
| 35.0 | 3 | 10 | 0.15 | 0.10 |

Table 6.

| Change in content of Cu (II) ions in dilute solution of $CuSO_4$ after pumping through a charged bipolar electrosorption membrane | | | |
|---|---|---|---|
| | Cu concentration, mg l⁻¹ | | |
| Volume of flown Solution, l m⁻² | E = 3.0 V | E = 4.0 V | E = 5.0 V |
| 0 | 75 | 75 | 75 |
| 5 | 57 | 35 | 13 |
| 10 | 48 | 28 | 9 |
| 15 | 46 | 26 | 7 |
| 20 | 45 | 25 | 5 |
| 25 | 45 | 25 | 4 |
| 30 | 45 | 25 | 4 |
| 35 | 45 | 25 | 4 |
| 40 | 45 | 25 | 4 |

Table 7.

| Change in content of $Cr_2O_7^{2-}$ ions in dilute solution of $K_2Cr_2O_7$ after pumping through a charged bipolar electrosorption membrane (E = 5.0 V) | |
|---|---|
| Volume of flown solution, l m⁻² | $Cr_2O_7^{2-}$ concentration, mg l⁻¹ |
| 0 | 85 |
| 5 | 46 |
| 10 | 20 |
| 15 | 13 |
| 20 | 9 |
| 25 | 5 |
| 30 | 3 |
| 35 | 3 |

Table 7. (continued)

| Change in content of $Cr_2O_7^{2-}$ ions in dilute solution of $K_2Cr_2O_7$ after pumping through a charged bipolar electrosorption membrane (E = 5.0 V) | |
| --- | --- |
| Volume of flown solution, l m$^{-2}$ | $Cr_2O_7^{2-}$ concentration, mg l$^{-1}$ |
| 40 | 3 |

## Claims

1. An electrosorption membrane made of a porous material.

2. A membrane as in claim 1, characterised in that the porous membrane is a porous ceramic membrane.

3. A membrane as in claim 1 or 2, characterised in that the porous membrane has been impregnated with an electronic and/or a mixed conducting layer.

4. A membrane as in claim 3, characterised in that the electronic and/or mixed conducting layer is selected from the group consisting of pyrolytic carbon, carbon aerogel, polyaniline, polyphosphate or a mixture thereof.

5. A membrane as in any of the claims 2 to 4, characterised in that the porous ceramic material is made of a multivalent metal oxide.

6. A membrane as in claim 5, characterised in that the multivalent metal oxide is an ampholyte, said ampholyte preferably selected from the group consisting of $Al_2O_3$, $ZrO_2$ or a mixture thereof.

7. A membrane as in any of the claims 1 to 6, characterised in that it is tubular.

8. Water purification device characterised in that it comprises a membrane according to any one of the preceding claims 1 to 7 and being adapted to act as an electrode.

9. Water purification device as in claim 8, characterised in that it comprises a first electrosorption outer tubular membrane and an inner membrane located inside the outer tubular membrane and spaced apart therefrom so that a first flow channel is defined between the outer tubular membrane and the inner membrane, both the outer tubular membrane and the inner membrane being adapted to act as electrodes.

10. Water purification device as in claim 9, characterised in that the inner membrane and/or the outer electrosorption membrane comprise electroconductive deposits on their surface.

11. Water purification device as in claim 9 or 10, characterised in that said inner membrane is tubular.

12. Water purification device as in any of the claims 9 to 11, characterised in that the inner membrane is an electrosorption membrane.

13. Water purification device characterised in that it comprises an electrosorption tubular membrane and an inner electrode located inside said electrosorption tubular membrane and spaced apart therefrom so that a first flow channel is defined between said electrosorption tubular membrane and the inner electrode, and an outer tubular electrode that is located around said electrosorption tubular membrane, forming a second flow channel located between said electrosorption tubular membrane and said outer tubular electrode.

14. Water purification device as in claim 13, characterised in that the outer tubular electrode comprises a porous ceramic membrane.

15. Water purification device as in claim 13 or 14, characterised in that the inner electrode and the outer tubular electrode comprise electroconductive deposits on their surface.

16. Water purification device as in any of the claims 13 to 15, characterised in that the first and the second flow channel each comprises one inlet or outlet to allow flow of water into one of the flow channels which is directed through the electrosorption tubular membrane to the other flow channel.

17. Method for manufacturing an electrosorption membrane according to any of the preceding claims 2 to 4, characterised in that a porous ceramic membrane is impregnated with disperse carbon by precipitation of pyrolytic carbon or with polyaniline by electrochemical deposition.

18. Use of the device according to any of the claims 8 to 16, for the removal of contaminants in an aqueous or non-aqueous fluids.

U, V

1

2

3

4

**Fig. 1**

5

11

8

9

7

6

**Fig. 2**

20
14
18
16
12
10

solution

Fig. 3

a

purified solution

solution

b

Fig. 4

**European Patent Office**

## EUROPEAN SEARCH REPORT

Application Number

EP 98 87 0082

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO 91 01392 A (IONEX) 7 February 1991 | 1-3,5-8, 18 | B01J47/08 B01D71/02 C02F1/469 |
| A | * the whole document * | 9-14 | |
| X | US 5 425 858 A (FARMER) 20 June 1995 | 1,18 | |
| A | * column 10, line 1 - column 13, line 38 * * column 14, line 36-48 * | 3,4 | |
| X | AU 629 790 A (W. H. JAY) 8 October 1992 | 1,3,4 | |
| A | * the whole document * | 17,18 | |
| A | GB 2 150 598 A (UKAEA) 3 July 1985 * page 2-3; claims 1-12 * | 1 | |
| A | WO 97 00830 A (FARADAY TECHN.) 9 January 1997 * page 17, line 8 - page 19, line 15 * | 1 | |

| | TECHNICAL FIELDS SEARCHED (Int.Cl.6) |
|---|---|
| | B01J B01D C02F |

The present search report has been drawn up for all claims

| Place of search | Date of completion of the search | Examiner |
|---|---|---|
| THE HAGUE | 28 July 1998 | Wendling, J-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document